# EUROPEAN PATENT APPLICATION

(11) **EP 4 717 519 A1**
(43) Date of publication of application: **01.04.2026**
(21) Application number: 24835187.6
(22) Date of filing: 11.06.2024
(51) Int. Cl.: B60N 2/90

(54) **SEAT ADJUSTMENT METHOD, ADJUSTMENT APPARATUS, AND ADJUSTMENT SYSTEM, AND VEHICLE**

(30) Priority: 05.07.2023 CN 202310819598
(71) Applicant: BYD Company Limited, Shenzhen, Guangdong 518118 (CN)
(72) Inventor: CAO, Xin, Shenzhen, Guangdong 518118 (CN); LI, Dongming, Shenzhen, Guangdong 518118 (CN); SU, Xudong, Shenzhen, Guangdong 518118 (CN); HUANG, Sheng, Shenzhen, Guangdong 518118 (CN); DU, Maoqing, Shenzhen, Guangdong 518118 (CN)
(74) Representative: Taor, Simon Edward William
(86) International application number: PCT/CN2024/098352
(87) International publication number: WO 2025/007704

(57) **Abstract**

This application discloses an adjustment method, apparatus, and system for a seat, and a vehicle. The method is applied to a vehicle, and the method includes: obtaining roll risk information representing a vehicle roll risk; and adjusting a seat side bolster based on the roll risk information. The roll risk information representing the vehicle roll risk is obtained, so that the seat side bolster is adjusted based on the roll risk information. This manner can accurately determine whether a body of an occupant is significantly rolled and whether the seat side bolster needs to provide support for the occupant, so that the seat side bolster is more accurately adjusted and seating comfort of the occupant is improved.

## Description

### CROSS-REFERENCE TO RELATED APPLICATIONS

The present disclosure claims priority to Chinese Patent Application No. 202310819598.6, filed on July 5, 2023 and entitled "ADJUSTMENT METHOD, APPARATUS, AND SYSTEM FOR SEAT, AND VEHICLE", which is incorporated herein by reference in its entirety.

### TECHNICAL FIELD

This application relates to the field of seat adjustment technologies, and more specifically, to an adjustment method, apparatus, and system for a seat, and a vehicle.

### BACKGROUND

In a related technology, for adjustment of a seat side bolster of a vehicle, control signals are usually generated based on vehicle speed and steering information, and a support angle of the seat side bolster is adjusted based on the control signals. However, this adjustment manner cannot reflect a roll state of the vehicle, preventing the adjustment of the side bolster from adapting to a posture of an occupant.

Therefore, a new technical solution needs to be provided to resolve the foregoing technical problem.

### SUMMARY

An objective of this application is to provide a new technical solution of an adjustment method for a seat, to solve the technical problem that the existing adjustment manner cannot reflect the roll state of the vehicle.

According to a first aspect of this application, an adjustment method for a seat is provided, and is applied to a vehicle. The method includes:
obtaining roll risk information representing a vehicle roll risk; and
adjusting a seat side bolster based on the roll risk information.

According to an embodiment of the present disclosure, the roll risk information includes a risk parameter; and
the adjusting a seat side bolster based on the roll risk information includes:
adjusting the seat side bolster when the risk parameter is greater than or equal to a specified threshold.

According to an embodiment of the present disclosure, the risk parameter includes at least one of the following:

The risk parameter includes a roll angle of the vehicle, the specified threshold includes an angle threshold, and the angle threshold ranges from 8° to 25°;
the risk parameter includes a speed of the vehicle, the specified threshold includes a speed threshold, and the speed threshold ranges from 20 km/h to 40 km/h; and
the risk parameter includes a steering angle of the vehicle, the specified threshold includes a steering angle threshold, and the steering angle threshold ranges from 5° to 30°.

According to an embodiment of the present disclosure, the specified threshold includes a first specified threshold and a second specified threshold, and the second specified threshold is greater than the first specified threshold.

According to an embodiment of the present disclosure, the roll risk information includes a roll angle of the vehicle.

According to an embodiment of the present disclosure, the roll risk information further includes at least one of a speed of the vehicle and a steering angle of the vehicle.

According to an embodiment of the present disclosure, before the adjusting a seat side bolster based on the roll risk information, the method further includes:
determining that the seat side bolster does not reach a target state.

According to an embodiment of the present disclosure, the target state is a state present when an occupant roll risk meets a safety requirement.

According to an embodiment of the present disclosure, the target state is a state present when target air pressure of an airbag of the seat meets a safety requirement.

According to an embodiment of the present disclosure, the adjusting a seat side bolster includes:
adjusting at least one of air pressure of the airbag of the seat and a support angle of the seat side bolster.

According to an embodiment of the present disclosure, the adjusting a seat side bolster based on the roll risk information further includes:
when the risk parameter is less than the specified threshold for specified duration, adjusting the seat side bolster to return to an initial position.

According to a second aspect of this application, an adjustment apparatus for a seat is provided. The apparatus includes: a processor, where the processor is connected to a memory, and the processor is configured to execute a program in the memory, to implement the method according to any one of the foregoing implementations.

According to a third aspect of this application, an adjustment system for a seat is provided. The system includes: the foregoing adjustment apparatus and an adjustment unit, where the adjustment apparatus controls the adjustment unit to adjust a seat side bolster. According to an embodiment of the present disclosure, the adjustment unit includes an airbag and an air supply unit, the airbag is adapted to be connected to the air supply unit, and the airbag is configured to adjust an angle of the seat side bolster.

According to an embodiment of the present disclosure, the adjustment system for the seat further includes a pneumatic system controller, where the air supply unit is connected to the airbag through the pneumatic system controller, and the adjustment apparatus controls air pressure of the airbag by controlling the pneumatic system controller.

According to an embodiment of the present disclosure, the adjustment system for the seat further includes a pressure reducing valve assembly, where the air supply unit includes a high-pressure air source, operating pressure of the high-pressure air source is higher than operating pressure of the airbag, and the high-pressure air source is connected to the pneumatic system controller through the pressure reducing valve assembly.

According to an embodiment of the present disclosure, the pressure reducing valve assembly includes a plurality of pressure reducing valves connected in series.

According to an embodiment of the present disclosure, the adjustment system for the seat includes a low-pressure air source, the air supply unit includes a high-pressure air source, operating pressure of the high-pressure air source is higher than operating pressure of the low-pressure air source, both the low-pressure air source and the high-pressure air source are adapted to be connected to the pneumatic system controller, and the low-pressure air source is configured to adjust the seat according to a seating requirement of an occupant.

According to an embodiment of the present disclosure, at least one of the high-pressure air source and the low-pressure air source includes an air pump and an air storage tank, the air pump is connected to the air storage tank, and the air storage tank is adapted to be connected to the pneumatic system controller.

According to an embodiment of the present disclosure, the low-pressure air source is disposed on the seat.

According to an embodiment of the present disclosure, the pneumatic system controller includes a side bolster support solenoid valve, both the high-pressure air source and the low-pressure air source are connected to the side bolster support solenoid valve, and the side bolster support solenoid valve is connected to the airbag.

According to an embodiment of the present disclosure, the pneumatic system controller includes a switch valve, the high-pressure air source is adapted to be connected to the side bolster support solenoid valve through the switch valve, and the switch valve is opened when a speed of a vehicle is higher than or equal to a speed threshold and a roll angle of the vehicle is greater than or equal to an adjustment threshold.

According to an embodiment of the present disclosure, the side bolster support solenoid valve includes an inflation valve, the inflation valve is connected to an inflation end of the airbag, and both the switch valve and the low-pressure air source are connected to the inflation valve.

According to an embodiment of the present disclosure, a relief valve is disposed between the inflation valve and the inflation end of the airbag, and the relief valve is adapted to release air when air pressure between the inflation valve and the inflation end of the airbag is higher than or equal to specified air pressure.

According to an embodiment of the present disclosure, the pneumatic system controller includes an exhaust valve, the exhaust valve is connected to an exhaust end of the airbag, and the exhaust valve is configured to exhaust air from the airbag.

According to an embodiment of the present disclosure, an air inlet of the air supply unit is adapted to intake air from a cabin.

According to an embodiment of the present disclosure, a first pressure sensing apparatus is disposed between the high-pressure air source and the pneumatic system controller.

According to an embodiment of the present disclosure, a second pressure sensing apparatus is disposed between the inflation valve and the airbag.

According to a fourth aspect of this application, a vehicle is provided. The vehicle includes an adjustment system for a seat according to any one of the foregoing implementations.

In embodiments of this application, the roll risk information representing the vehicle roll risk is obtained, so that the seat side bolster is adjusted based on the roll risk information. This manner can accurately determine whether a body of the occupant is significantly rolled and whether the seat side bolster needs to provide support for the occupant, so that the seat side bolster is more accurately adjusted and seating comfort of the occupant is improved.

According to the following detailed description of example embodiments of this application with reference to the accompanying drawings, other features and advantages of this application become clear.

### BRIEF DESCRIPTION OF DRAWINGS

The accompanying drawings incorporated into this specification and constituting a part of this specification show embodiments of this application, and are used, together with descriptions of the accompanying drawings, to explain the principles of this application.
FIG. 1 is a flowchart of an adjustment method for a seat according to an embodiment of this application;
FIG. 2 is a block diagram of an adjustment system for a seat according to an embodiment of this application; and
FIG. 3 is a diagram of a structure of an adjustment system for a seat according to an embodiment of this application.

### Reference numerals:

100: signal obtaining unit; 101: roll angle sensor; 102: steering angle sensor; 103: speed sensor; 200: control unit; 300: adjustment unit; 301: high-pressure air source; 302: low-pressure air source; 303: cabin; 304: first pressure reducing valve; 305: second pressure reducing valve; 306: first pressure sensor; 307: third pressure sensor; 308: second pressure sensor; 309: pneumatic system controller; 310: switch valve; 311: airbag; 3111: high-pressure air inlet; 3112: low-pressure air inlet; 312: support solenoid valve; 3121: inflation valve; 3122: exhaust valve; 313: relief valve; 401: backrest side bolster; 402: cushion side bolster.

### DESCRIPTION OF EMBODIMENTS

Example embodiments of this application are described in detail with reference to the accompanying drawings. It should be noted that, unless otherwise specified, relative arrangements, numerical expressions, and values of components and steps described in these embodiments do not limit the scope of this application.

The following description of at least one example embodiment is merely illustrative and shall not be construed as any limitation to this application, and application or use thereof.

Technologies, methods, and devices known by a person of ordinary skill in the art may not be discussed in detail, but the technologies, methods, and devices shall be considered as a part of this specification in appropriate circumstances.

In all examples shown and discussed herein, any specific value should be construed as merely an example rather than a limitation. Therefore, other examples of example embodiments may have different values.

It should be noted that, similar reference numerals and letters represent similar items in the following accompanying drawings. Therefore, once an item is defined in one accompanying drawing, the item does not need to be further discussed in the following accompanying drawings.

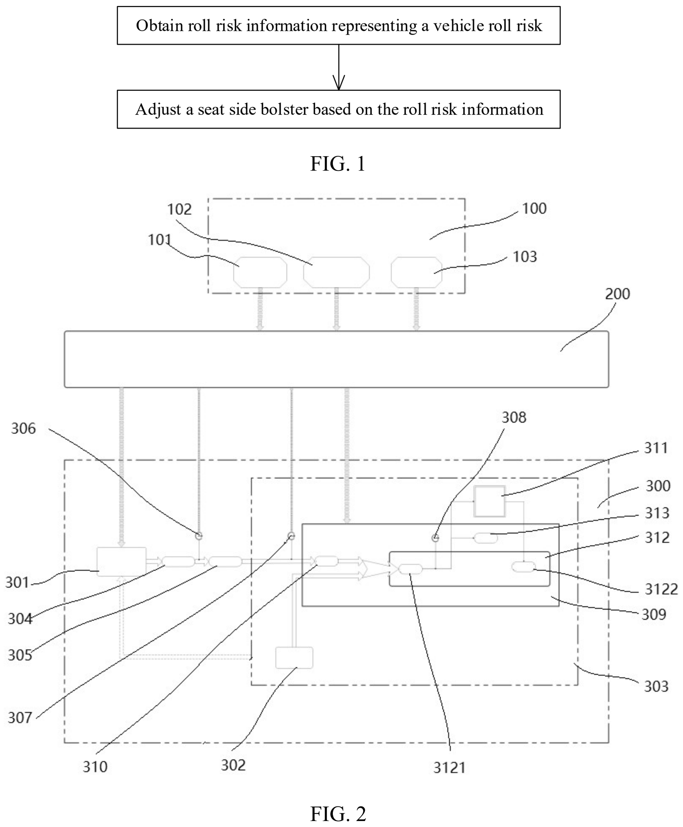

According to an embodiment of this application, an adjustment method for a seat is provided. As shown in FIG. 1, the adjustment method for the seat is applied to a vehicle and includes:
obtaining roll risk information representing a vehicle roll risk; and
adjusting a seat side bolster based on the roll risk information.

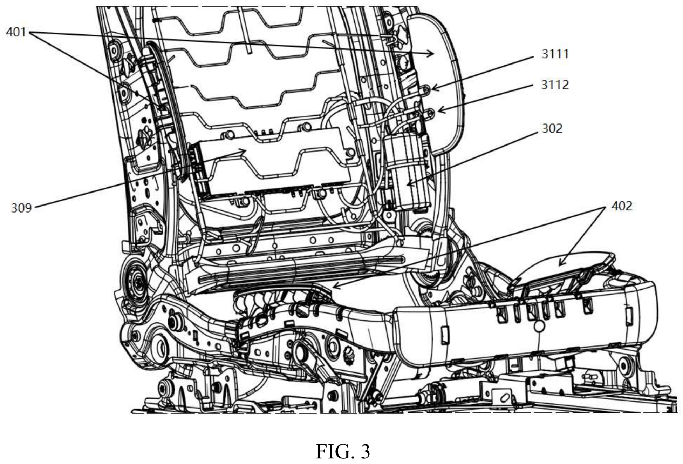

Specifically, the adjustment method for the seat is used to adjust a support angle of the seat side bolster. As shown in FIG. 3, the seat side bolster includes a cushion side bolster 402 and a backrest side bolster 401. Support angles/a support angle of the cushion side bolster 402 and/or backrest side bolster 401 are/is adjusted, to provide appropriate support for an occupant, and avoid an excessive roll of a body of the occupant during a vehicle roll.

Certainly, the seat side bolster is not limited to the foregoing embodiment, and the seat side bolster may alternatively include only the cushion side bolster 402 or the backrest side bolster 401, or a side bolster in another form.

Usually, a length of the vehicle is greater than a width, and therefore, a vehicle roll risk is high. For example, when the vehicle encounters a slope or turns, a roll is likely to occur, causing the occupant or an object carried by the vehicle to roll.

In this example, the roll risk information representing the vehicle roll risk is obtained, so that the seat side bolster is adjusted based on the roll risk information. This manner can accurately determine whether a body of the occupant is significantly rolled and whether the seat side bolster needs to provide support for the occupant, so that the seat side bolster is more accurately adjusted and seating comfort of the occupant is improved.

Certainly, the seat side bolster may also provide support for the object carried by the vehicle, to improve stability of the object.

In an example, the roll risk information includes a risk parameter; and
the adjusting a seat side bolster based on the roll risk information includes:
adjusting the seat side bolster when the risk parameter is greater than or equal to a specified threshold.

In this example, the seat side bolster is adjusted based on a comparison result between the risk parameter and the specified threshold. If the risk parameter exceeds the specified threshold, the seat side bolster is adjusted when the vehicle rolls to a specified level, rather than under any condition. In this manner, this allows for more accurate timing of seat side bolster adjustment, and adjusting the seat side bolster based on meeting a preset condition saves energy.

In an example, the roll risk information includes a roll angle of the vehicle. The roll angle can directly represent a tilt angle of the vehicle. For example, when the vehicle travels over an inclined road or a vehicle load is unevenly distributed, a roll is likely to occur. Adjusting the seat side bolster based on the roll angle of the vehicle can effectively determine a roll degree of the vehicle and accurately determine timing of seat side bolster adjustment.

Certainly, the risk parameter is not limited to the roll angle, and a person skilled in the art may select the risk parameter according to an actual requirement.

In an example, the roll risk information further includes at least one of a speed of the vehicle and a steering angle of the vehicle.

In this example, the seat side bolster is adjusted based on the roll angle of the vehicle, and the at least one of the speed and the steering angle of the vehicle. The steering angle is a steering angle of a steering wheel of the vehicle. Rolling is likely to occur when the vehicle turns. During vehicle traveling, a higher speed of the vehicle indicates a higher vehicle roll risk. Through comprehensive determining of a plurality of risk parameters, a vehicle roll risk can be determined more effectively.

For example, the seat side bolster is adjusted based on the roll angle and the speed of the vehicle.

Alternatively, the seat side bolster is adjusted based on the steering angle and the roll angle of the vehicle.

Alternatively, the seat side bolster is adjusted based on the roll angle, the steering angle, and the speed of the vehicle.

Alternatively, the risk parameter includes at least two of the foregoing conditions.

In an example, the seat side bolster is adjusted when the risk parameter is greater than or equal to a specified threshold.

For example, the seat side bolster is adjusted when the speed of the vehicle is higher than or equal to a speed threshold, and the roll angle is greater than or equal to an angle threshold.

Alternatively, the seat side bolster is adjusted when the roll angle of the vehicle is greater than or equal to the angle threshold, and the steering angle is greater than or equal to a steering angle threshold.

Alternatively, the seat side bolster is adjusted when the speed of the vehicle is higher than or equal to the speed threshold, the steering angle is greater than or equal to the steering angle threshold, and the roll angle is greater than or equal to the angle threshold.

A method for generating an adjustment parameter of the seat side bolster based on different risk parameters may also be a combination of any of the foregoing conditions. A person skilled in the art may select the specified threshold and the risk parameter according to an actual requirement.

When the risk parameter is a combination of the speed, the roll angle, and the steering angle, the vehicle roll risk is more accurately determined.

In an example, the risk parameter includes at least one of the following:

The risk parameter includes a roll angle of the vehicle, the specified threshold includes an angle threshold, and the angle threshold ranges from 8° to 25°;
the risk parameter includes a speed of the vehicle, the specified threshold includes a speed threshold, and the speed threshold ranges from 20 km/h to 40 km/h; and
the risk parameter includes a steering angle of the vehicle, the specified threshold includes a steering angle threshold, and the steering angle threshold ranges from 5° to 30°.

In this example, a range of the specified threshold is controlled, to effectively determine whether the seat side bolster needs to be adjusted, thereby more accurately controlling the timing of seat side bolster adjustment.

Certainly, the range of the specified threshold is not limited to the foregoing embodiment, and a person skilled in the art may select the range according to an actual requirement.

When the speed of the vehicle is low, even if the vehicle rolls, the occupant can adjust a sitting posture in a timely manner to adapt to a roll of the vehicle. When the speed of the vehicle is high, the occupant has no time to adjust the sitting posture. Similarly, when the speed of the vehicle is low, if the roll angle of the vehicle is small, the occupant does not experience significant discomfort.

In a specific example, the speed of the vehicle is compared with the speed threshold, and the roll angle of the vehicle is compared with the angle threshold. The speed of the vehicle reaching the speed threshold and the roll angle reaching the angle threshold are used as trigger conditions for seat side bolster adjustment. When the trigger conditions are met, the seat side bolster is adjusted. This manner can avoid unnecessary seat side bolster adjustment.

For example, the speed threshold is 30 km/h, and the angle threshold is 10°. When the speed of the vehicle reaches 30 km/h and the roll angle reaches 10° during vehicle traveling, the adjustment parameter of the seat side bolster is generated to adjust the seat side bolster.

If the speed does not reach 30 km/h or the roll angle does not reach 10°, the seat side bolster is not adjusted.

In a specific example, the roll angle of the vehicle is compared with the angle threshold, and the steering angle of the vehicle is compared with the steering angle threshold. The roll angle of the vehicle reaching the angle threshold and the steering angle reaching the steering angle threshold are used as trigger conditions for seat side bolster adjustment. When the trigger conditions are met, the adjustment parameter of the seat side bolster is generated to adjust the seat side bolster. This manner can also avoid unnecessary seat side bolster adjustment.

For example, the speed threshold is 8° and the steering angle threshold is 5°. When the roll angle of the vehicle reaches 8° and the steering angle reaches 5° during vehicle traveling, the adjustment parameter of the seat side bolster is generated to adjust the seat side bolster.

If the roll angle does not reach 8° or the steering angle does not reach 5°, the seat side bolster is not adjusted.

In a specific example, the speed of the vehicle is compared with the speed threshold, the roll angle of the vehicle is compared with the angle threshold, and the steering angle of the vehicle is compared with the steering angle threshold. The speed of the vehicle reaching the speed threshold, the roll angle reaching the angle threshold, and the steering angle reaching the steering angle threshold are used as trigger conditions for seat side bolster adjustment. When the trigger conditions are met, the adjustment parameter of the seat side bolster is generated to adjust the seat side bolster. This manner can also avoid unnecessary seat side bolster adjustment.

For example, the speed threshold is 20 km/h, the angle threshold is 25°, and the steering angle threshold is 15°. When the speed of the vehicle reaches 20 km/h, the roll angle reaches 25°, and the steering angle reaches 15° during vehicle traveling, the adjustment parameter of the seat side bolster is generated to adjust the seat side bolster.

If the speed does not reach 20 km/h, the roll angle does not reach 25° or the steering angle does not reach 15°, the seat side bolster is not adjusted.

Certainly, the speed threshold, the steering angle threshold, and the angle threshold are not limited to the foregoing embodiment, and may be selected by a person skilled in the art according to an actual requirement.

In an example, the specified threshold includes a first specified threshold and a second specified threshold, and the second specified threshold is greater than the first specified threshold.

In this example, different specified thresholds are set, to generate a plurality of adjustment parameters, thereby providing a plurality of levels of seat side bolster adjustment to meet requirements of seat side bolster adjustment in different scenarios. For example, a larger specified threshold indicates a larger roll angle of the vehicle, and a larger adjustment parameter needs to be output to meet a support requirement of the occupant. On the contrary, a smaller specified threshold indicates a smaller roll angle of the vehicle, and a smaller adjustment parameter needs to be output.

In a specific example, the specified threshold is the angle threshold. The angle threshold includes a first angle threshold and a second angle threshold, and the second angle threshold is greater than the first angle threshold.

In this example, when the roll angle is greater than or equal to the first angle threshold but less than the second angle threshold, a first adjustment parameter is generated to adjust the seat side bolster.

When the roll angle is greater than or equal to the second angle threshold, a second adjustment parameter is generated to adjust the seat side bolster. Because the second angle threshold is greater than the first angle threshold, the second adjustment parameter results in a larger adjustment angle of the seat side bolster.

For example, the first angle threshold is 10°, and the second angle threshold is 15°. In this way, seat side bolster adjustment is set to two levels, thereby meeting adjustment requirements of the seat side bolster in different scenarios.

Certainly, there are not limited to two specified thresholds, and a person skilled in the art may set a quantity of specified thresholds according to an actual requirement.

In an example, the adjusting a seat side bolster includes: adjusting at least one of air pressure of an airbag of the seat and a support angle of the seat side bolster.

In this example, the seat side bolster may be adjusted directly by adjusting the support angle of the seat side bolster. When the support angle of the seat side bolster reaches a specified support angle, adjustment is stopped. This adjustment manner can accurately adjust the seat side bolster.

Alternatively, the seat side bolster may be adjusted indirectly by adjusting air pressure of the airbag of the seat side bolster. For example, the adjustment parameter includes the air pressure of the airbag 311. Higher air pressure of the airbag 311 indicates a larger volume of the airbag 311, and a larger support angle of the seat side bolster. On the contrary, lower air pressure of the airbag 311 indicates a smaller support angle of the seat side bolster. The support angle of the seat side bolster is indirectly adjusted by using a magnitude of the air pressure of the airbag 311, simplifying an operation of adjusting the seat side bolster.

In an example, the adjusting a seat side bolster based on the roll risk information further includes:
when the risk parameter is less than the specified threshold for specified duration, adjusting the seat side bolster to return to an initial position.

For example, when the speed of the vehicle is lower than the speed threshold and/or the roll angle is less than the angle threshold for the specified duration, the seat side bolster is restored to an initial state.

For example, the specified duration is 3 seconds. In this example, the seat side bolster maintains an adjusted state until the trigger conditions are cleared. After the trigger conditions are cleared, and the seat side bolster maintains the adjusted state for 3 seconds, the seat side bolster is gradually restored to the initial state. For example, the initial state is a state before the seat side bolster is adjusted or a state present when the seat side bolster reaches a specified angle, for example, 0°.

Certainly, alternatively, when the steering angle of the vehicle is less than the steering angle threshold for the specified duration, the seat side bolster may be restored to the initial state. The specified duration is not limited herein, and a person skilled in the art may set the specified duration according to an actual requirement.

In an example, before the adjusting a seat side bolster based on the roll risk information, the method further includes: determining that the seat side bolster does not reach a target state.

For example, a current state of the seat side bolster is obtained, and the current state is compared with the target state corresponding to the adjustment parameter; when the current state does not reach the target state, the seat side bolster is adjusted. If the current state reaches the target state, the seat side bolster is not adjusted.

This manner can effectively determine whether the seat side bolster needs to be adjusted, avoiding unnecessary operation.

The current state of the seat side bolster may include a current support angle, and the like. The target state may be a target support angle of the seat side bolster. When the current support angle does not reach the target support angle, the support angle of the seat side bolster is increased to reach the target support angle.

If the current support angle is greater than or equal to the target support angle, the seat side bolster is appropriately adjusted. In this case, the seat side bolster is not adjusted.

This manner can determine whether the seat side bolster needs to be adjusted based on comparison between the current state of the seat side bolster and the target state, thereby improving accuracy of seat adjustment.

In a specific example, the current support angle of the seat side bolster is 30° (for example, relative to a cushion or a backrest). If the target support angle is 40°, the seat side bolster is adjusted, to enable an angle value of the seat side bolster to reach 40°. If the current support angle is greater than or equal to 40°, it indicates that the seat side bolster is appropriately adjusted and the seat side bolster does not need to be adjusted under this condition. This manner can effectively avoid excessive seat side bolster adjustment.

The current state may be current air pressure of the airbag, and the target state is target air pressure of the airbag.

The seat side bolster is usually adjusted by using the airbag, and the magnitude of the air pressure can represent a magnitude of the support angle of the seat side bolster. In this example, it is determined whether the seat side bolster needs to be adjusted by obtaining the current air pressure of the airbag and comparing the current air pressure with the target air pressure. Obtaining the air pressure of the airbag is easier and more accurate than obtaining the current support angle of the seat side bolster. This manner makes seat side bolster adjustment more accurate.

In an example, the target state is a state present when an occupant roll risk meets a safety requirement.

For example, the safety requirement is met when a roll angle of the occupant is less than or equal to a specified value. Under this condition, the occupant does not feel uncomfortable due to a roll, or there is no risk of occupant tipping over. For example, the specified value ranges from 20° to 45°.

Certainly, the specified value is not limited to the foregoing embodiment, and a person skilled in the art may select the range according to an actual requirement.

In an example, the target state is a state present when target air pressure of an airbag of the seat meets a safety requirement.

For example, when the air pressure of the airbag reaches a specified value, the support angle of the seat side bolster can meet a support requirement of the occupant, to ensure that the occupant roll risk meets the safety requirement.

Certainly, a person skilled in the art may select the specified value according to an actual requirement.

According to another embodiment of this application, an adjustment apparatus for a seat is provided. As shown in FIG. 2, the apparatus includes: a processor, where the processor is connected to a memory, and the processor is configured to execute a program in the memory, to implement the foregoing adjustment method for the seat.

According to another embodiment of this application, an adjustment system for a seat is provided. The system includes the foregoing adjustment apparatus and an adjustment unit. The adjustment apparatus controls the adjustment unit to adjust a seat side bolster. For example, the adjustment apparatus includes a signal obtaining unit 100 and the control unit 200. The signal obtaining unit 100 is configured to obtain roll risk information representing a vehicle roll risk.

The adjustment unit 300 is configured to adjust a seat side bolster based on the roll risk information.

For example, the signal obtaining unit 100 includes a speed sensor 103 and a roll angle sensor 101. The speed sensor 103 is, for example, a speed sensor 103 in an intelligent integrated power brake (Integrated Power Brake, IPB for short). The roll angle sensor 101 is, for example, a roll angle sensor 101 in an electric active suspension system (Di-Suspension, DISUS for short). The speed sensor 103 is configured to obtain a speed of a vehicle. The roll angle sensor 101 is configured to obtain a roll angle of the vehicle.

In another example, the signal obtaining unit 100 is further configured to obtain a steering angle of a steering wheel of the vehicle. For example, the signal obtaining unit 100 further includes a steering angle sensor 102 of the steering wheel in an electric power steering system (EPS). Active seat side bolster adjustment can also be implemented by obtaining the steering angle of the steering wheel.

The signal obtaining unit 100 is connected to the control unit 200. The control unit 200 is, for example, a vehicle control unit of the vehicle or a controller independently disposed in the adjustment system for the seat. The control unit 200 is configured to issue roll risk information. The roll risk information is described above.

The adjustment unit 300 adjusts the seat side bolster by using a structure such as an air pressure adjustment structure, and a connecting rod adjustment structure.

The adjustment system for the seat can implement active seat side bolster adjustment, to adjust the seat side bolster in a timely manner when the vehicle rolls during vehicle traveling, to adjust an angle of the seat side bolster and provide support for an occupant, avoiding an excessive roll of the occupant.

In an example, as shown in FIG. 2, the adjustment unit 300 includes an airbag 311 and an air supply unit, the airbag 311 is adapted to be connected to the air supply unit, and the airbag 311 is configured to adjust an angle of the seat side bolster.

For example, the airbag 311 includes a left side bolster airbag and a right side bolster airbag. The airbag 311 abuts against the seat side bolster. The left side bolster airbag is configured to adjust an angle of a seat side bolster on the left of the seat. The right side bolster airbag is configured to adjust an angle of a seat side bolster on the right of the seat. The air supply unit is configured to supply air to the airbag 311 to change a volume of the airbag 311. Because the airbag 311 abuts against the seat side bolster, the angle of the seat side bolster is changed by changing the volume of the airbag 311.

The air supply unit includes, for example, an air pump. The air pump is adapted to be connected to the airbag 311. Further, the air supply unit further includes an air storage tank, and the like. The air pump is connected to the air storage tank. The air storage tank is adapted to be connected to the airbag 311. The air storage tank may be directly connected to the airbag 311 through a pipeline, or may be indirectly connected to the airbag 311. For example, a valve, a flowmeter, a pressure sensing apparatus, or the like is provided on the pipeline. The air pump may be, but is not limited to, an air compressor, a nitrogen compressor, an inert air compressor, or the like.

In this example, the adjustment unit 300 has a simple structure and a small volume, and is easy to install and disassemble.

In addition, a pneumatic adjustment manner is not limited by a distance between the air supply unit and the airbag 311, and the air supply unit and the airbag 311 can be installed according to a requirement of a spatial position.

Certainly, the adjustment unit 300 is not limited to the foregoing embodiment, and the angle of the seat side bolster may be adjusted in a manner such as a connecting rod, a worm gear, or a screw rod.

In an example, as shown in FIG. 2, the adjustment system for the seat further includes a pneumatic system controller 309. The air supply unit is connected to the airbag 311 through the pneumatic system controller 309, and the adjustment apparatus controls air pressure of the airbag 311 by controlling the pneumatic system controller 309.

The pneumatic system controller 309 can open or close a circuit of the air supply unit to supply air to the airbag 311 based on the roll risk information, thereby controlling air supply from the air supply unit to the airbag 311.

The pneumatic system controller 309 includes a plurality of valves. Air is supplied to the airbag 311 through open and closed states of the plurality of valves.

In an example, the adjustment system for the seat further includes a pressure reducing valve assembly, where the air supply unit includes a high-pressure air source 301, operating pressure of the high-pressure air source 301 is higher than operating pressure of the airbag 311, and the high-pressure air source 301 is connected to the pneumatic system controller 309 through the pressure reducing valve assembly.

In this example, the high-pressure air source 301 can provide sufficient high-pressure air in a short time to meet a requirement for rapid inflation of the airbag 311. Because air pressure of the high-pressure air source 301 is much higher than the operating pressure of the airbag 311, there is a need to reduce pressure of air supplied by the high-pressure air source 301. An inlet of the pressure reducing valve assembly is adapted to be connected to the high-pressure air source 301, and an outlet of the pressure reducing valve assembly is adapted to be connected to the airbag 311. The pressure reducing valve assembly can effectively reduce the pressure of air supplied by the high-pressure air source 301, to adapt to the following operating pressure of the following pneumatic system controller 309 and the airbag 311.

According to an embodiment of the present disclosure, the high-pressure air source 301 is an air source for an air suspension system of the vehicle. In this example, the air suspension system and the adjustment system for the seat share the high-pressure air source 301, thereby saving space inside the vehicle.

Alternatively, the high-pressure air source 301 may be an independent air source, to supply air to the airbag 311 in a more timely manner.

In a specific example of this application, as shown in FIG. 2, the pressure reducing valve assembly includes a plurality of pressure reducing valves connected in series.

Usually, air pressure of the high-pressure air of the high-pressure air source 301 is much higher than the operating pressure of the airbag 311. Reducing the pressure by using only one pressure reducing valve requires a high-quality pressure reducing valve, and it is easy to cause damage to the pressure reducing valve. In this example, the plurality of pressure reducing valves are disposed to gradually reduce the pressure of the high pressure air, thereby effectively extending a service life of the pressure reducing valve assembly.

For example, the operating pressure of the high-pressure air source 301 is 2 MPa. However, maximum air pressure that the pneumatic system controller 309 can withstand is 0.2 MPa. The airbag 311 has rated operating pressure of 0.15 MPa. To meet operating pressure requirements of the pneumatic system controller 309 and the airbag 311, the pressure reducing valve assembly includes a first pressure reducing valve 304 and a second pressure reducing valve 305. The first pressure reducing valve 304 and the second pressure reducing valve 305 are connected in series in a pipeline between the high-pressure air source 301 and the pneumatic system controller. For example, the first pressure reducing valve 304 is configured to reduce the air pressure of the high-pressure air output by the high-pressure air source 301 from 2 MPa to 0.2 MPa. The second pressure reducing valve 305 is configured to reduce the air pressure from 0.2 MPa to the rated operating pressure of the airbag 311, namely, 0.15 MPa.

The pressure of the high-pressure air supplied by the high-pressure air source 301 can be effectively reduced by using the plurality of pressure reducing valves. Moreover, a service life of the plurality of pressure reducing valves is long.

In addition, even if some of the plurality of pressure reducing valves fail, other pressure reducing valves can still operate, thereby preventing the high pressure air from damaging a component downstream of the pressure reducing valve assembly, thereby effectively reducing a failure rate of the adjustment system for the seat.

In an example, as shown in FIG. 2, a first pressure sensing apparatus is disposed between the high-pressure air source 301 and the pneumatic system controller 309.

The first pressure sensing apparatus can effectively reflect air pressure of the pipeline between the high-pressure air source 301 and the pneumatic system controller 309, thereby preventing the pneumatic system controller 309 from being damaged due to excessively high air pressure of the pipeline.

In a specific implementation of this application, as shown in FIG. 2, the first pressure sensing apparatus includes a first pressure sensor 306. The first pressure sensor 306 is disposed between the first pressure reducing valve 304 and the second pressure reducing valve 305. The first pressure sensor 306 can effectively sense outlet air pressure of the first pressure reducing valve 304, to determine whether the outlet air pressure meets an air intake requirement of the second pressure reducing valve 305.

In an example, as shown in FIG. 2 and FIG. 3, the adjustment system for the seat includes a low-pressure air source 302. Operating pressure of the high-pressure air source 301 is higher than operating pressure of the low-pressure air source 302, both the low-pressure air source 302 and the high-pressure air source 301 are adapted to be connected to the pneumatic system controller 309, and the low-pressure air source 302 is configured to adjust the seat according to a seating requirement of an occupant.

In this example, the low-pressure air source 302 is configured to adjust the seat according to a seating requirement of the occupant. For example, the occupant manually adjusts a position of the seat, a roll angle of a backrest, and the angle of the seat side bolster, to meet the seating requirement of the occupant. The occupant sends control instructions to the low-pressure air source 302 and the pneumatic system controller 309 according to a manual adjustment requirement, to adjust the seat.

In this example, the airbag 311 has a high-pressure air inlet 3111 and a low-pressure air inlet 3112. The high-pressure air inlet 3111 is configured to supply air from the high-pressure air source 301 to the airbag 311. The low-pressure air inlet 3112 is configured to supply air from the low-pressure air source 302 to the airbag 311.

The high-pressure air source 301 is configured to implement an active adjustment function of the seat side bolster, that is, when the vehicle rolls beyond a specific angle during vehicle traveling, the high-pressure air source 301 actively supplies air to adjust the angle of the seat side bolster, to support the occupant. Under this condition, there is a need to quickly increase the volume of the airbag 311 to a specified value, to meet a requirement of the seat side bolster for supporting the occupant. The high-pressure air source 301 can supply a large amount of air at high air pressure once.

The low-pressure air source 302 is configured for passive adjustment of the seat, for example, adjustment of the seat according to the requirement of the occupant described above. In this condition, an adjustment speed does not need to be particularly fast, but needs to be gradually adjusted based on seating experience of the occupant. For example, passive adjustment may be set to a plurality of adjustment levels, with each level adapted to an occupant of a corresponding body type. The seat can be manually adjusted to different levels to meet the seating requirement of the occupant.

In an example, as shown in FIG. 2, at least one of the high-pressure air source 301 and the low-pressure air source 302 includes an air pump and an air storage tank, the air pump is connected to the air storage tank, and the air storage tank is adapted to be connected to the pneumatic system controller 309.

The air storage tank can store air for seat adjustment. The air storage tank is disposed, to avoid frequent opening and closing of the air pump.

Certainly, in another example, the low-pressure air source 302 may be provided with only the air pump due to low air consumption.

In an example, as shown in FIG. 3, the low-pressure air source 302 is disposed on the seat.

For example, the low-pressure air source 302 is disposed on the backrest of the seat or below a cushion of the seat. This manner can effectively simplify a pipeline design of the low-pressure air source 302.

In an example, as shown in FIG. 2, the pneumatic system controller 309 includes a side bolster support solenoid valve 312. Both the high-pressure air source 301 and the low-pressure air source 302 are connected to the side bolster support solenoid valve 312. The side bolster support solenoid valve 312 is connected to the airbag 311.

In this example, the side bolster support solenoid valve 312 is configured to switch between the high-pressure air source 301 and the low-pressure air source 302 for operation, to meet requirements for active and passive seat side bolster adjustment.

In an example, as shown in FIG. 2, the pneumatic system controller 309 includes a switch valve 310. The high-pressure air source 301 is adapted to be connected to the side bolster support solenoid valve 312 through the switch valve 310. The switch valve 310 is opened when the speed of the vehicle is higher than or equal to a speed threshold and the roll angle is greater than or equal to an adjustment threshold.

In this example, when the switch valve 310 is closed, the low-pressure air source 302 can supply air to the airbag 311 to adjust the seat. When the switch valve 310 is opened, the high-pressure air source 301 can supply air to the airbag 311 to adjust the seat side bolster.

In an example, as shown in FIG. 2, the side bolster support solenoid valve 312 includes an inflation valve 3121. The inflation valve 3121 is connected to an inflation end of the airbag 311. Both the switch valve 310 and the low-pressure air source 302 are connected to the inflation valve 3121.

In this example, the adjustment system for the seat typically includes a plurality of airbags 311. The inflation valve 3121 distributes air supplied by the high-pressure air source 301 and the low-pressure air source 302 to corresponding airbags 311 to adjust the seat side bolster.

In an example, as shown in FIG. 2, the first pressure sensing apparatus includes a third pressure sensor 307. The third pressure sensor 307 is disposed between the second pressure reducing valve 305 and the switch valve 310. The third pressure sensor 307 can effectively sense outlet pressure of the second pressure reducing valve 305, to determine whether the outlet pressure meets an intake requirement of the switch valve 310.

In an example, as shown in FIG. 2, a relief valve 313 is disposed between the inflation valve 3121 and the inflation end of the airbag 311. The relief valve 313 is adapted to release air when air pressure between the inflation valve 3121 and the inflation end of the airbag 311 is greater than or equal to specified air pressure.

For example, the relief valve 313 is mounted on a pipeline between the inflation valve 3121 and the inflation end of the airbag 311. When air pressure of the pipeline is abnormal, the relief valve 313 is opened to exhaust air in the pipeline. In this manner, the relief valve 313 can protect a component in the adjustment system for the seat.

A person skilled in the art may set exhaust pressure of the relief valve 313 according to an actual requirement.

In an example, as shown in FIG. 2, a second pressure sensing apparatus is disposed between the inflation valve 3121 and the airbag 311.

The second pressure sensing apparatus includes a second pressure sensor 308. The second pressure sensor 308 is configured to sense air pressure of the pipeline between the inflation valve 3121 and the inflation end of the airbag 311. The air pressure can reflect air pressure of the airbag 311. The second pressure sensor 308 is disposed, to effectively determine whether the air pressure of the airbag 311 meets a requirement of seat side bolster adjustment, thereby preventing the air pressure of the airbag 311 from being too high or too low.

In addition, the second pressure sensor 308 can sense the air pressure of the airbag 311, to determine a current state of the seat side bolster, to determine whether the current state of the seat side bolster needs to be adjusted.

In an example, as shown in FIG. 2, the pneumatic system controller 309 includes an exhaust valve 3122. The exhaust valve 3122 is connected to an exhaust end of the airbag 311. The exhaust valve 3122 is configured to exhaust air from the airbag 311.

In this example, the exhaust valve 3122 is configured to exhaust air in the airbag 311 after trigger conditions are cleared, to restore the seat side bolster to an initial position.

In an example, as shown in FIG. 2, an air inlet of the air supply unit is adapted to intake air from a cabin 303.

The cabin 303 is, for example, a cockpit or a luggage compartment. Usually, an external environment of the vehicle is complex, for example, air quality of the external environment is unstable, such as high dust content, high humidity, and high toxic and harmful substance content. If the air inlet is disposed outside the vehicle, the air supply unit may be damaged.

However, air in the cabin 303 is usually filtered through an air filter of the vehicle, so that air quality is stable and content of a harmful component is low. In this example, the air inlet of the air supply unit is disposed in the cabin 303, to avoid damage to the air supply unit due to poor air quality.

In a specific embodiment of this application, in the adjustment system for the seat, the seat is adjusted based on different risk parameters under different operating conditions.

For example, an operating process in which the adjustment system for the seat makes adjustment based on the roll angle of the vehicle is as follows:
The vehicle is started and powered on. A first pressure sensing apparatus located between the first pressure reducing valve 304 and the second pressure reducing valve 305 operates. When the first pressure sensing apparatus indicates abnormal pressure, an air inlet of the high-pressure air source 301 is closed. When the first pressure sensing apparatus indicates normal pressure, a first pressure sensing apparatus located between the second pressure reducing valve 305 and the switch valve 310 operates. When the first pressure sensing apparatus indicates abnormal pressure, the air inlet of the high-pressure air source 301 is closed.

When the first pressure sensing apparatus indicates that normal pressure, the adjustment apparatus determines whether the traveling speed of the vehicle reaches the speed threshold. The active adjustment function of the seat side bolster is not activated when the traveling speed of the vehicle does not reach the speed threshold.

When the traveling speed of the vehicle reaches the speed threshold, the adjustment apparatus determines whether the roll angle of the vehicle reaches a first angle threshold. When the first angle threshold is not reached, the active adjustment function of the seat side bolster is not activated.

When the first angle threshold is reached, the adjustment apparatus determines whether the roll angle of the vehicle reaches a second angle threshold. When the second angle threshold is not reached, the control unit 200 determines whether current air pressure of the airbag 311 reaches target air pressure corresponding to a first adjustment parameter for the first angle threshold. When the target air pressure is not reached, a first adjustment parameter of the seat side bolster is generated. The switch valve 310 is opened, to inflate an airbag 311 on a same side as a roll direction. When the target air pressure is reached, the switch valve 310 is not opened. The active adjustment function of the seat side bolster is not activated.

When the second angle threshold is reached, the adjustment apparatus determines whether the current air pressure of the airbag 311 reaches target air pressure corresponding to a second adjustment parameter for the second angle threshold. When the target air pressure is not reached, a second adjustment parameter of the seat side bolster is generated. The switch valve 310 is opened, to inflate the airbag 311 on the same side as the roll direction. When the target air pressure is reached, the switch valve 310 is not opened. The active adjustment function of the seat side bolster is not activated.

For example, an operating process in which the adjustment system for the seat adjusts the seat side bolster based on the steering angle of the steering wheel is as follows:
The vehicle is started and powered on. The first pressure sensing apparatus located between the first pressure reducing valve 304 and the second pressure reducing valve 305 operates. When the first pressure sensing apparatus indicates abnormal pressure, the air inlet of the high-pressure air source 301 is closed. When the first pressure sensing apparatus indicates normal pressure, the first pressure sensing apparatus located between the second pressure reducing valve 305 and the switch valve 310 operates. When the first pressure sensing apparatus indicates abnormal pressure, the air inlet of the high-pressure air source 301 is closed.

When the first pressure sensing apparatus indicates that normal pressure, the adjustment apparatus determines whether the traveling speed of the vehicle reaches the speed threshold. When the traveling speed of the vehicle does not reach the speed threshold, the control unit 200 does not generate the adjustment parameter of the seat side bolster. The active adjustment function of the seat side bolster is not activated.

When the traveling speed of the vehicle reaches the speed threshold, the adjustment apparatus determines whether the steering angle of the steering wheel reaches the first steering angle threshold. When the first steering angle threshold is not reached, the adjustment parameter of the seat side bolster is not generated. The active adjustment function of the seat side bolster is not activated.

When the first steering angle threshold is reached, the adjustment apparatus determines whether the roll angle of the vehicle reaches a second steering angle threshold. When the second steering angle threshold is not reached, the adjustment apparatus determines whether the current air pressure of the airbag 311 reaches target air pressure corresponding to a third adjustment parameter for the first steering angle threshold. When the target air pressure is not reached, a third adjustment parameter of the seat side bolster is generated. The switch valve 310 is opened, to inflate the airbag 311 on an opposite side of the roll direction. When the target air pressure is reached, the switch valve 310 is not opened. The active adjustment function of the seat side bolster is not activated.

When the second steering angle threshold is reached, the adjustment apparatus determines whether the current air pressure of the airbag 311 reaches target air pressure corresponding to a fourth adjustment parameter for the second steering angle threshold. When the target air pressure is not reached, a fourth adjustment parameter of the seat side bolster is generated. The switch valve 310 is opened, to inflate the airbag 311 on the opposite side of the roll direction. When the target air pressure is reached, the switch valve 310 is not opened. The active adjustment function of the seat side bolster is not activated.

In this embodiment of this application, in the adjustment system for the seat, the seat is adjusted based on different parameters under different operating conditions. This manner can meet use requirements of the vehicle under different operating conditions.

According to still another embodiment of this application, a vehicle is provided. The vehicle includes the foregoing adjustment system for the seat.

The vehicle can implement active seat side bolster adjustment.

In the foregoing embodiments, differences between embodiments are mainly described. Different optimization features between embodiments may be combined into a better embodiment, provided that there is no contradiction. For brevity, details are not described herein again.

Although some specific embodiments of this application are described in detail by using examples, a person skilled in the art should understand that the foregoing examples are merely for description, but are not intended to limit the scope of this application. A person skilled in the art should understand that modifications may be made to the foregoing embodiments without departing from the spirit and scope of this application. The scope of this application is limited only by the appended claims.

## Claims

1. An adjustment method for a seat, applied to a vehicle, comprising:
obtaining roll risk information representing a vehicle roll risk; and
adjusting a seat side bolster based on the roll risk information.

2. The adjustment method for the seat according to claim 1, wherein the roll risk information comprises a risk parameter; and
the adjusting a seat side bolster based on the roll risk information comprises:
adjusting the seat side bolster when the risk parameter is greater than or equal to a specified threshold.

3. The adjustment method for the seat according to claim 2, wherein the risk parameter comprises at least one of the following:
the risk parameter comprises a roll angle of the vehicle, the specified threshold comprises an angle threshold, and the angle threshold ranges from 8° to 25°;
the risk parameter comprises a speed of the vehicle, the specified threshold comprises a speed threshold, and the speed threshold ranges from 20 km/h to 40 km/h; and
the risk parameter comprises a steering angle of the vehicle, the specified threshold comprises a steering angle threshold, and the steering angle threshold ranges from 5° to 30°.

4. The adjustment method for the seat according to claim 2 or 3, wherein the specified threshold comprises a first specified threshold and a second specified threshold, and the second specified threshold is greater than the first specified threshold.

5. The adjustment method for the seat according to claim 1, wherein the roll risk information comprises a roll angle of the vehicle.

6. The adjustment method for the seat according to claim 5, wherein the roll risk information further comprises at least one of a speed of the vehicle and a steering angle of the vehicle.

7. The adjustment method for the seat according to claim 1, wherein before the adjusting a seat side bolster based on the roll risk information, the method further comprises:
determining that the seat side bolster does not reach a target state.

8. The adjustment method for the seat according to claim 7, wherein the target state is a state present when an occupant roll risk meets a safety requirement.

9. The adjustment method for the seat according to claim 7, wherein the target state is a state present when target air pressure of an airbag of the seat meets a safety requirement.

10. The adjustment method for the seat according to any one of claims 1 to 9, wherein the adjusting a seat side bolster comprises:
adjusting at least one of air pressure of the airbag of the seat and a support angle of the seat side bolster.

11. The adjustment method for the seat according to any one of claims 1 to 10, wherein the adjusting a seat side bolster based on the roll risk information further comprises:
when the risk parameter is less than the specified threshold for specified duration, adjusting the seat side bolster to return to an initial position.

12. An adjustment apparatus for a seat, comprising a processor, wherein the processor is connected to a memory, and the processor is configured to execute a program in the memory, to implement the method according to any one of claims 1 to 11.

13. An adjustment system for a seat, comprising the adjustment apparatus according to claim 12 and an adjustment unit, wherein the adjustment apparatus controls the adjustment unit to adjust a seat side bolster.

14. The adjustment system for the seat according to claim 13, wherein the adjustment unit comprises an airbag and an air supply unit, the airbag is adapted to be connected to the air supply unit, and the airbag is configured to adjust an angle of the seat side bolster.

15. The adjustment system for the seat according to claim 14, further comprising a pneumatic system controller, wherein the air supply unit is connected to the airbag through the pneumatic system controller, and the adjustment apparatus controls air pressure of the airbag by controlling the pneumatic system controller.

16. The adjustment system for the seat according to claim 15, further comprising a pressure reducing valve assembly, wherein the air supply unit comprises a high-pressure air source, operating pressure of the high-pressure air source is higher than operating pressure of the airbag, and the high-pressure air source is connected to the pneumatic system controller through the pressure reducing valve assembly.

17. The adjustment system for the seat according to claim 16, wherein the pressure reducing valve assembly comprises a plurality of pressure reducing valves connected in series.

18. The adjustment system for the seat according to claim 15, wherein the adjustment system for the seat comprises a low-pressure air source, the air supply unit comprises a high-pressure air source, operating pressure of the high-pressure air source is higher than operating pressure of the low-pressure air source, both the low-pressure air source and the high-pressure air source are adapted to be connected to the pneumatic system controller, and the low-pressure air source is configured to adjust the seat according to a seating requirement of an occupant.

19. The adjustment system for the seat according to claim 18, wherein at least one of the high-pressure air source and the low-pressure air source comprises an air pump and an air storage tank, the air pump is connected to the air storage tank, and the air storage tank is adapted to be connected to the pneumatic system controller.

20. The adjustment system for the seat according to claim 18, wherein the low-pressure air source is disposed on the seat.

21. The adjustment system for the seat according to claim 18, wherein the pneumatic system controller comprises a side bolster support solenoid valve, both the high-pressure air source and the low-pressure air source are connected to the side bolster support solenoid valve, and the side bolster support solenoid valve is connected to the airbag.

22. The adjustment system for the seat according to claim 21, wherein the pneumatic system controller comprises a switch valve, the high-pressure air source is adapted to be connected to the side bolster support solenoid valve through the switch valve, and the switch valve is opened when a speed of a vehicle is higher than or equal to a speed threshold and a roll angle of the vehicle is greater than or equal to an adjustment threshold.

23. The adjustment system for the seat according to claim 22, wherein the side bolster support solenoid valve comprises an inflation valve, the inflation valve is connected to an inflation end of the airbag, and both the switch valve and the low-pressure air source are connected to the inflation valve.

24. The adjustment system for the seat according to claim 23, wherein a relief valve is disposed between the inflation valve and the inflation end of the airbag, and the relief valve is adapted to release air when air pressure between the inflation valve and the inflation end of the airbag is higher than or equal to specified air pressure.

25. The adjustment system for the seat according to claim 21, wherein the pneumatic system controller comprises an exhaust valve, the exhaust valve is connected to an exhaust end of the airbag, and the exhaust valve is configured to exhaust air from the airbag.

26. The adjustment system for the seat according to claim 18, wherein a first pressure sensing apparatus is disposed between the high-pressure air source and the pneumatic system controller.

27. The adjustment system for the seat according to claim 23, wherein a second pressure sensing apparatus is disposed between the inflation valve and the airbag.

28. A vehicle, comprising the adjustment system for the seat according to any one of claims 13 to 27.
